# EUROPEAN PATENT APPLICATION

(11) **EP 4 119 603 A1**
(43) Date of publication of application: **18.01.2023**
(21) Application number: 21768095.8
(22) Date of filing: 17.02.2021
(51) Int. Cl.: C08J 7/04, B05D 5/00, B05D 7/24, B32B 27/20, B32B 27/30, B65D 65/02, B65D 65/40, C09K 3/00, C09K 3/18

(54) **LIQUID-REPELLANT STRUCTURE, PRODUCTION METHOD FOR LIQUID-REPELLANT STRUCTURE, COATING LIQUID FOR LIQUID REPELLANT LAYER FORMATION, AND PACKAGING MATERIAL**

(30) Priority: 12.03.2020 JP 2020042789; 27.11.2020 JP 2020197262
(71) Applicant: TOPPAN INC., Tokyo 110-0016 (JP)
(72) Inventor: KATO Ryoji, Tokyo 110-0016 (JP); KINOSHITA Kosuke, Tokyo 110-0016 (JP); OGIHARA Yu, Tokyo 110-0016 (JP)
(74) Representative: TBK
(86) International application number: PCT/JP2021/005910
(87) International publication number: WO 2021/182043

(57) **Abstract**

A liquid repellent structure includes a surface to which liquid repellency is to be imparted, and a liquid repellent layer formed on the surface. In the structure: the liquid repellent layer contains a binder resin containing a fluorine-containing resin, and a filler dispersed in the binder resin; the filler contains a first filler having a BET specific surface area M of 100 m²/g to 400 m²/g; and the ratio M/F of the BET specific surface area M of the first filler to a mass F (mass%) of the fluorine-containing resin relative to the total mass of the liquid repellent layer is 4.1 to 20.0.

## Description

### [Technical Field]

The present disclosure relates to liquid repellent structures, methods of producing a liquid repellent structure, liquid repellent layer-forming coating liquids, and packaging materials.

### [Background Art]

Various modes are known for structures having water repellency. For example, PTL 1 discloses a single layer water-repellent heat seal film containing a thermoplastic resin and hydrophobic particles.

### [Citation List]

### [Patent Literature]

PTL 1: JP 2017-155183 A

### [Summary of the Invention]

### [Technical Problem]

In the inventions described in PTL 1, water repellency is evaluated based on the contact angle with water droplets or the like. However, in the invention described in this document, liquid repellency to liquids containing oil (e.g., salad oil, curry, and fresh cream) is not discussed. In particular, this liquid repellency in question is required to be maintained for a long period of time; however, the invention described in this document does not clearly show whether this is possible.

The present disclosure aims to provide a liquid repellent structure having good liquid repellency to oil or oil-containing liquids, etc. for a long period of time. Furthermore, the present disclosure aims to provide a method of producing the liquid repellent structure, a liquid repellent layer-forming coating liquid, and a packaging material having the liquid repellent structure on the side that comes in contact with substances.

### [Solution to Problem]

A liquid repellent structure according to the present disclosure includes a surface to which liquid repellency is to be imparted (which may be termed treatment surface hereinafter), and a liquid repellent layer formed on the surface. In the liquid repellent structure, the liquid repellent layer contains a binder resin containing a fluorine-containing resin, and a filler dispersed in the binder resin. In the liquid repellent layer, the filler contains a first filler having a BET specific surface area M of 100 m²/g to 400 m²/g; and the ratio M/F of the BET specific surface area M of the first filler to a mass F (mass%) of the fluorine-containing resin relative to the total mass of the liquid repellent layer is 4.1 to 20.0.

The liquid repellent layer provided to the liquid repellent structure has good liquid repellency to water and oil, and can maintain the liquid repellency particularly to oil or oil-containing liquids, etc. (e.g., salad oil, curry, and fresh cream) for a long period of time. The present inventors consider the reasons why the above effects can be obtained to be as follows. Specifically, micro-asperities formed of the first filler will significantly contribute to exhibiting liquid repellency to liquids having a low surface tension. The shape and the number of the micro-asperities will be determined by the ratio (M/F) between the BET specific surface area of the first filler and the mass of the fluorine-containing resin. If M/F is in the above range, the micro-asperities can be efficiently formed, while exhibiting good liquid repellency and maintaining the liquid repellency for a long period of time.

In the liquid repellent structure, the first filler may have a structure in which a plurality of primary particles are connected to each other in a bead-like manner. The bead structure of the bead filler can easily impart flexibility to the liquid repellent layer due to the three-dimensional structure, and can maintain liquid repellency for a longer period of time.

In the liquid repellent structure, the fluorine-containing resin may contain a fluorine-acrylic copolymer. Due to the fluorine-acrylic copolymer being contained, liquid repellency can be maintained for a longer period of time.

In the liquid repellent structure, the filler may contain a scale-like filler. Due to the liquid repellent layer containing a scale filler, asperities can be more efficiently formed on the surface thereof, and liquid repellency to oil or oil-containing liquids, etc. can be easily maintained for a longer period of time. Furthermore, liquid repellency can also be easily maintained for a long period of time to surfactant-containing liquids, etc.

The liquid repellent structure may further include a primer layer between the surface and the liquid repellent layer, and the primer layer may contain a binder resin and a third filler having an average primary particle size of 5 µm to 60 µm. Thus, rough asperities can be formed on the liquid repellent structure. Since the rough asperities facilitate point contact between the liquid repellent layer and the contents, deterioration of the liquid repellency can be further suppressed.

In the liquid repellent structure, a surface roughness Sa thereof may be 1.5 µm to 15.0 µm to easily achieve the effect of retaining the contents in the state of point contact.

The present disclosure provides a packaging material having the liquid repellent structure on a side that comes in contact with substances. As described above, the liquid repellent layer provided to the liquid repellent structure exhibits good liquid repellency to oil or oil-containing liquids, etc. for a long period of time. Accordingly, the packaging material can be applied to substances (e.g., salad oil, curry, and fresh cream) containing oil.

The present disclosure provides a method of producing a liquid repellent structure. The liquid repellent structure is produced through the following steps of forming a liquid repellent layer. Specifically, the method for producing a liquid repellent structure includes the steps of: preparing a coating liquid that contains a binder resin containing a fluorine-containing resin, and a filler; forming a coating film of the coating liquid on a surface to which liquid repellency is to be imparted; and forming a liquid repellent layer by drying and curing the coating film. In the coating liquid used for the above production method, the filler contains a first filler having a BET specific surface area M of 100 m²/g to 400 m²/g; and a ratio M/F of the BET specific surface area M of the first filler to a mass F (mass%) of the fluorine-containing resin relative to a total mass of a solid content contained in the coating liquid is 4.1 to 20.0. Through the above method, the liquid repellent structure of the present disclosure having the above effects can be produced.

The present disclosure provides a liquid repellent layer-forming liquid used in the method of producing a liquid repellent structure. Specifically, the liquid repellant layer-forming coating liquid contains a binder resin containing a fluorine-containing resin, and a filler. In the liquid repellant layer-forming coating liquid, the filler contains a first filler having a BET specific surface area M of 100 m²/g to 400 m²/g; and a ratio M/F of the BET specific surface area M of the first filler to a mass F (mass%) of the fluorine-containing resin relative to a total mass of a solid content contained in the coating liquid is 4.1 to 20.0. Using the above coating liquid, the liquid repellent structure of the present disclosure having the above effects can be produced.

### [Advantageous Effects of the Invention]

According to the present disclosure, there is provided a liquid repellent structure having good liquid repellency to oil or oil-containing liquids, etc. for a long period of time. Furthermore, according to the present disclosure, there are provided a method of producing the liquid repellent structure, a liquid repellent layer-forming coating liquid, and a packaging material having the liquid repellent structure on the side that comes in contact with substances.

### [Brief Description of the Drawings]

Fig. 1 is a schematic cross-sectional view illustrating an embodiment of a liquid repellent structure according to the present disclosure.
Fig. 2 is a schematic cross-sectional view illustrating another embodiment of the liquid repellent structure according to the present disclosure.
Fig. 3 is a schematic cross-sectional view illustrating still another embodiment of the liquid repellent structure according to the present disclosure.

### [Description of the Embodiments]

With reference to the accompanying drawings, some embodiments of the present disclosure will be described in detail below. In the following description, the same elements or elements having the same functions will be denoted using the same reference signs to omit repeated explanation.

### <Liquid repellent structure>

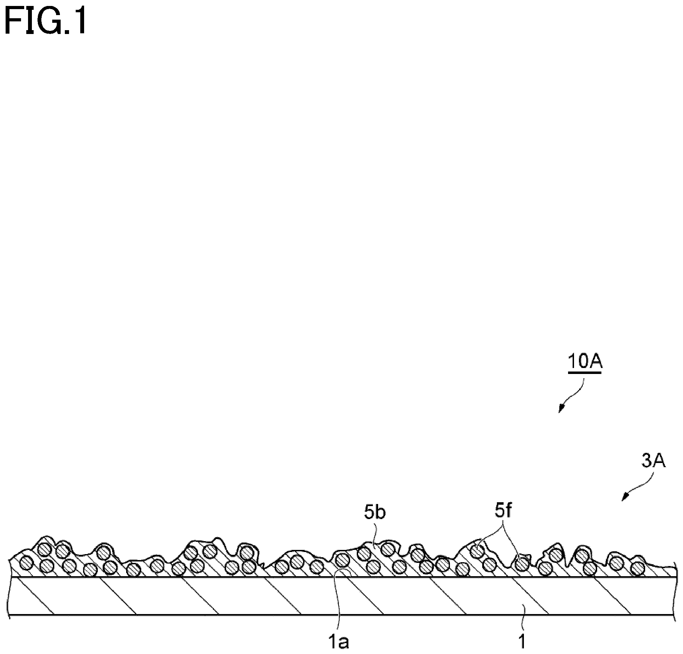

Fig. 1 is a schematic cross-sectional view illustrating an embodiment of a liquid repellent structure according to the present disclosure. As shown in Fig. 1, a liquid repellent structure 10A includes a substrate 1 having a treatment surface 1a (surface to which liquid repellency is to be imparted), and a liquid repellent layer 3A formed on the treatment surface 1a.

### (Substrate)

The substrate 1 is not particularly limited as long as it has a surface to which liquid repellency is to be imparted and serves as a support. For example, the substrate 1 may have a film-like shape (thickness: about 10 µm to 200 µm) or may have a plate-like shape (thickness: about 1 mm to 10 mm). The film-like substrate may be, for example, paper, resin films, metal foils, and the like. By forming a liquid repellent layer 3 on the inner surface, as the treatment surface 1a, of a packaging material film made of such materials, a packaging bag to which the contents are less likely to adhere can be obtained. The plate-like substrate may be, for example, paper, resins, metals, glass, and the like. By forming a liquid repellent layer 3 on the inner surface, as the treatment surface 1a, of a container made of such materials, a container to which the contents are less likely to adhere can be obtained.

The paper may be high-quality paper, special high-quality paper, coated paper, art paper, cast-coated paper, imitation paper, kraft paper, and the like. The resins may be polyolefins, acid-modified polyolefins, polyesters (e.g., polyethylene terephthalate (PET)), polyethylenes (PEs), polypropylenes (PPs), polyamides (PAs), polyvinyl chlorides (PVCs), cellulose acetates, cellophane resins, and the like. The metals may be, for example, aluminum, nickel, and the like.

If the substrate 1 has a film-like shape, it is preferred that the substrate 1 is thermally fusible with the liquid repellent layer 3. If a primer layer is interposed between the substrate 1 and the liquid repellent layer 3, as will be described later, it is preferred that the substrate 1 is thermally fusible with the primer layer. The substrate 1 is preferred to have a melting point of 170°C or lower. Thus, when a packaging bag is formed using heat sealing, adhesion between the substrate 1 and the liquid repellent layer 3 becomes stronger, so that the heat sealing properties are further improved. From this perspective, the melting point of the substrate 1 is more preferably 150°C or lower. The melting point of the substrate 1 can be measured through differential scanning calorimetric analysis.

### (Liquid repellent layer)

The liquid repellent layer 3A has liquid repellency and contains a first filler 5f and a binder resin 5b. The liquid repellent layer 3A is formed covering part or all of the surface of the substrate 1. Liquid repellency is a concept encompassing both water repellency and oil repellency, and specifically refers to properties of repelling aqueous or oily materials in the forms of liquids, semisolids, or gels. The aqueous or oily materials may include foods such as water, oil (salad oil, etc.), yogurt, curry, fresh cream, jelly, pudding, syrup, porridge, and soup; cleaning agents such as hand soap, body soap, shampoo, and hair conditioner; cosmetics such as hand cream and milky lotion; pharmaceuticals; and chemicals. In the liquid repellent structure 10, the liquid repellent layer 3A forms the innermost layer or the outermost layer so as to directly come in contact with these materials. The liquid repellent layer of the present embodiment can maintain liquid repellency (liquid repellent durability) particularly to oil or oil-containing liquids, etc. among the above materials for a long period of time.

As shown in Fig. 1, the liquid repellent layer 3A contains the first filler 5f. Particles of the first filler 5f each have a spherical shape, for example, and are preferred to have an average primary particle size of 3 nm to 1,000 nm, more preferably 5 nm to 100 nm, or even more preferably 5 nm to 20 nm. When the first filler 5f has the average primary particle size of 3 nm or more, the first filler is likely to easily form micro-asperities without being buried in the fluorine-containing resin, and when the first filler 5f has the average primary particle size of 1,000 nm or less, micro-asperities tend to be easily formed by the fluorine-containing resin and the first filler. The average primary particle size of the first filler refers to an average of values each of which is obtained by measuring a major axis and a minor axis of each of any 10 particles of the first filler in a SEM or TEM field of view and dividing the sum of each of them by 2.

The material forming the first filler 5f may be silica, titanium oxide, aluminum oxide, mica, talc, calcium carbonate, barium sulfate, zinc oxide, smectite, zeolite, acrylic resins, or the like.

The first filler 5f may be a bead filler having a structure in which a plurality of primary particles are connected to each other in a bead-like manner. The bead structure of the bead filler may include a structure, as a branch structure, in which spherical particles are connected to each other in a chain, in addition to the structure in which spherical particles are connected to each other in a bead-like manner. The bead structure can easily impart flexibility to the liquid repellent layer due to the three-dimensional structure. The bead filler may also be referred to as a pearl necklace filler.

Particles of the bead filler are preferred to have an average particle size (average secondary particle size) of 50 nm to 1,000 nm, more preferably 100 nm to 400 nm, or even more preferably 100 nm to 200 nm. If the average particle size of the bead filler is 50 nm or more, flexibility of the bead filler may tend to be easily imparted to the liquid repellent layer, and if it is 1,000 nm or less, the bead filler may tend to easily form micro-asperities. The average particle size of the bead filler refers to an average of values each of which is obtained by measuring a major axis and a minor axis of each of any 10 particles of the bead filler in a TEM field of view and dividing the sum of each of them by 2.

The first filler 5f has a BET specific surface area M of 100 m²/g to 400 m²/g. If the BET specific surface area M is 100 m²/g or more, micro-asperities sufficient for achieving liquid repellency can be formed, and if it is 400 m²/g or less, the first filler can form micro-asperities without being buried in the fluorine-containing resin. From this perspective, the BET specific surface area M of the first filler 5f is preferred to be 130 m²/g to 300 m²/g, and more preferred to be 200 m²/g to 300 m²/g. The BET specific surface area of the filler is measured using the BET method.

The content of the first filler 5f in the liquid repellent layer 3A may be, for example, 20 mass% to 80 mass%, more preferably 30 mass% to 75 mass%, or even more preferably 30 mass% to 50 mass%, relative to the total mass of the liquid repellent layer. If the content of the first filler 5f is in the above range, separation of the first filler 5f can be easily reduced or prevented, while imparting sufficient asperities to the liquid repellent layer 3A, and thus, good liquid repellency can be easily achieved due to the presence of the first filler 5f.

Commercially available products may be used as the first filler 5f. Commercially available silica fillers may be, for example, AEROSIL (AEROSIL 130, 200, 300, 380, etc.) manufactured by Nippon Aerosil Co., Ltd., REOLOSIL (QS-10, 20, 40) manufactured by Tokuyama Corporation, spherical silica microparticles QSG manufactured by Shin-Etsu Chemical Co., Ltd., the SNOWTEX series (SNOWTEX ST-30, etc.) manufactured by Nissan Chemical Corporation, or the like. Commercially available aluminum oxide fillers may be, for example, AEROXIDE Alu manufactured by Evonik Degussa GmbH. Furthermore, commercially available bead fillers may be, for example, the HDK series (HDK V15, N20, T30, T40, etc.) manufactured by Wacker Asahikasei Silicone Co., Ltd., or the SNOWTEX series (SNOWTEX PS-S-PO, etc.) manufactured by Nissan Chemical Corporation.

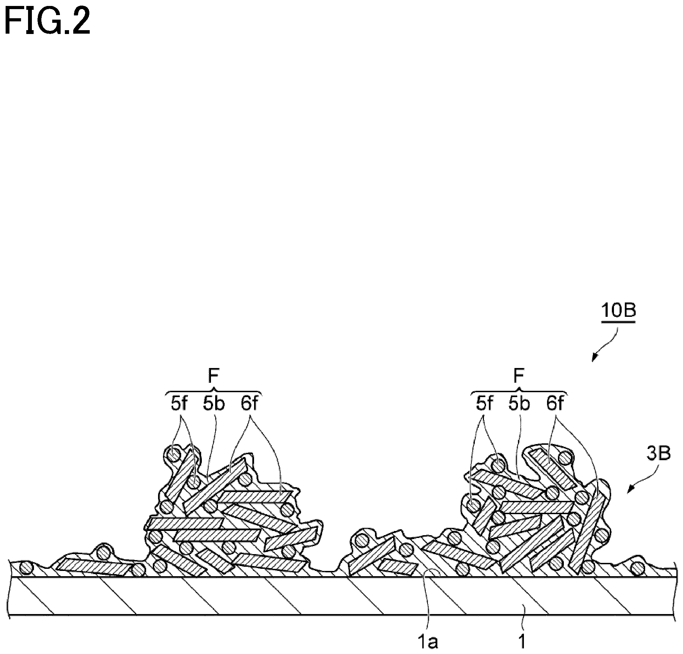

Fig. 2 is a schematic cross-sectional view illustrating another embodiment of the liquid repellent structure according to the present disclosure. As shown in Fig. 2, a liquid repellent structure 10B includes a substrate 1 having a treatment surface 1a, and a liquid repellent layer 3B formed on the treatment surface 1a. As shown in Fig. 2, the liquid repellent layer 3B may further contain a second filler 6f in addition to the first filler 5f and the binder resin 5b. The second filler 6f has a scale-like (flake-like) shape and thus the filler can be termed a scale-like (flake-like) filler. If the filler contains the second filler 6f, the liquid repellent layer 3B may contain aggregates F of the first and second fillers 5f and 6f. The first filler 5f, the second filler 6f, and the aggregates F form asperities on the surface of the liquid repellent layer 3B. The aggregates F are formed of the first and second fillers 5f and 6f, and the binder resin 5b covering these fillers. The liquid repellent layer 3B having such a structure can more efficiently form asperities on the surface thereof, and can easily maintain liquid repellency (oil repellency) to oil or oil-containing liquids, etc. for a long period of time. Furthermore, the liquid repellent layer 3B can also easily maintain liquid repellency to surfactant-containing liquids, etc. for a long period of time.

The second filler 6f can be present in the form of primary particles, secondary aggregates, or tertiary aggregates thereof. The secondary aggregates are formed of a plurality of overlapped primary particles of the second filler 6f in a parallel orientation. The tertiary aggregates of the second filler 6f are formed when irregularly overlapped primary particles or secondary aggregates grow into crystals in various directions.

The second filler 6f is preferred to have an average particle size of 0.1 µm to 6 µm, and more preferably 0.1 µm to 4 µm or 4 µm to 6 µm. If the average particle size of the second filler 6f is 0.1 µm or more, the aggregates F can be easily formed, and if it is 6 µm or less, sufficient liquid repellency can be exhibited due to the complicated and fine configuration of the second filler 6f. The average particle size of the second filler refers to an average of values each of which is obtained by measuring a major axis and a minor axis of each of any 10 particles of the second filler in a SEM field of view and dividing the sum of each of them by 2.

The material forming the second filler 6f may be silica, mica, aluminum oxide, talc, titanium oxide, calcium carbonate, barium sulfate, zinc oxide, smectite, zeolite, or the like. Examples of commercially available products of scale-like silica include SUNLOVELY manufactured by AGC Si-Tech Co., Ltd. Examples of commercially available products of scale-like mica include Repco Mica manufactured by Repco Inc. Examples of commercially available products of scale-like aluminum oxide include Cerasur manufactured by Kawai Lime Industry Co., Ltd. The second filler 6f does not necessarily need to be subjected to hydrophobic treatment or liquid repellency treatment.

The content of the second filler 6f in the liquid repellent layer 3B may be, for example, 5 parts by mass to 100 parts by mass, more preferably 5 parts by mass to 75 parts by mass, or even more preferably 5 parts by mass to 50 parts by mass, relative to 100 parts by mass of the first filler 5f. If the content of the second filler 6f is in the above range, formation of excessively large aggregates can be easily reduced or prevented which would otherwise have been caused due to excessive stacking (aggregation) of the primary particles of the second filler 6f, while achieving good liquid repellency due to the presence of the first and second fillers 5f and 6f.

The plurality of aggregates F may be separate from each other in the liquid repellent layer 3B. In other words, the plurality of aggregates F may be in the form of islands. Alternatively, a large number of aggregates F may be continuously formed to form a porous layer of the aggregates F on the liquid repellent layer 3B. Furthermore, the aggregates F have a complicated configuration derived from the complicated and fine configuration of the second filler 6f. Specifically, the aggregates F are aggregated in the state in which a plurality of primary particles (e.g., particles with an average primary particle size of 0.1 µm to 6 µm) of the second filler 6f are randomly arranged, forming a pleated surface and voids formed by the pleats. The present inventors have studied and found that, when the size ((major axis + minor axis)/2) of a single aggregate F is 4 µm or more, the aggregates F greatly contribute to improving liquid repellency of the liquid repellent layer.

The binder resin 5b contains at least a fluorine-containing resin. The binder resin 5b may further contain a thermoplastic resin and/or a crosslinking agent. If the binder resin 5b contains a crosslinking agent, the binder resin 5b in the liquid repellent layer 3 may have a crosslinked structure, being crosslinked with the fluorine-containing resin or the thermoplastic resin via the crosslinking agent.

The fluorine-containing resin that can be used appropriately may include, but is not particularly limited to, resins having a perfluoroalkyl, perfluoroalkenyl, or perfluoropolyether structure, or other structures. The fluorine-containing resin is preferred to contain a fluorine-acrylic copolymer, from the perspective of further improving liquid repellency of the liquid repellent layer 3. The fluorine-acrylic copolymer is a copolymer of a fluorine-containing monomer and an acrylic monomer. The fluorine-acrylic copolymer may be a block copolymer or a random copolymer. Using the fluorine-acrylic copolymer, the liquid repellent layer 3 can be improved in weather resistance, water resistance, chemical resistance, and film-forming properties.

The fluorine content of the fluorine-containing resin may be, for example, 30 mass% to 60 mass%, and more preferably 40 mass% to 50 mass%. The fluorine content refers to the proportion of the mass of fluorine atoms relative to the total mass of the atoms forming the fluorine-containing resin.

As the fluorine-containing resin, commercially available fluorine-based coating materials can be used. The commercially available fluorine-based coating materials may be, for example, AsahiGuard manufactured by AGC Inc., SFcoat manufactured by AGC Seimi Chemical Co., Ltd., Ftergent manufactured by Neos Co., Ltd., Fluorolink manufactured by Solvay, Unidyne manufactured by Daikin Industries Ltd., the H-3539 series manufactured by DKS Co. Ltd., the Modiper F series manufactured by NOF Corporation, or the like.

Using the fluorine-containing resin, liquid repellency can be improved against oil or oil-containing liquids, or highly viscous liquids containing surfactants or the like (e.g., milky lotion, hand soap, body soap, shampoo, and hair conditioner). From this perspective, the fluorine-containing resin may be resins containing no structural units derived from pyrrolidone or its derivatives (pyrrolidones). Pyrrolidones may include, for example, N-vinyl-2-pyrrolidone, N-vinyl-3-methyl-2-pyrrolidone, N-vinyl-5-methyl-2-pyrrolidone, and N-vinyl-3,3-dimethyl-2-pyrrolidone. Fluorine-containing resins containing no structural units derived from pyrrolidones may include, for example, AsahiGuard AG-E060, AG-E070, AG-E082, and AG-E090 manufactured by AGC Inc., and Unidyne TG-8111 manufactured by Daikin Industries, Ltd.

The thermoplastic resin may include, for example, but is not particularly limited to, low density polyethylenes, medium density polyethylenes, high density polyethylenes, ethylene-a olefin copolymers, homo, block, or random polypropylenes, propylene-a olefin copolymers, and ethylene-vinyl acetate copolymers. For example, the ethylene-a olefin copolymers may be block copolymers, random copolymers, or the like of propylene and α olefins. As the α olefin components, ethylene, 1-butene, 1-pentene, 1-hexene, 1-heptene, 1-octene, 4-methyl-1-pentene, and the like can be exemplified.

The melting point of the thermoplastic resin may be, for example, 50°C to 135°C. If the melting point is 135°C or lower, the fluorine-containing resin can easily bleed out on the surface of the liquid repellent layer. If the fluorine-containing resin bleeds out on the surface, the surface free energy can be reduced, and thus, good liquid repellency can be exhibited on the surface of the liquid repellent layer. It should be noted that a high temperature drying method may be used to promote bleed out of the fluorine-containing resin; however, this may cause damage, such as deformation, to the substrate 1 because a considerably high temperature is required if the thermoplastic resin has an excessively high melting point. Furthermore, if the melting point is 50°C or higher, some degree of crystallinity can be secured, and thus, the occurrence of blocking due to softening can be minimized. From this perspective, the melting point of the thermoplastic resin is more preferred to be 60°C to 120°C.

The thermoplastic resin may be a modified polyolefin modified with a predetermined acid. The modified polyolefin may be obtained, for example, by graft-modifying a polyolefin with an unsaturated carboxylic acid derivative component derived from an unsaturated carboxylic acid, unsaturated carboxylic acid anhydride, unsaturated carboxylic acid ester, or the like. As the polyolefin, a modified polyolefin such as a hydroxyl group-modified polyolefin or acrylic-modified polyolefin can be used. The modified polyolefin resin may include, for example, Auroren manufactured by Nippon Paper Industries Co., Ltd., Zaikthene manufactured by Sumitomo Seika Chemicals Co., Ltd., Unistole manufactured by Mitsui Chemicals, Inc., and Arrowbase manufactured by Unitika Ltd.

The above modified polyolefins are preferred from the perspective of easily forming a crosslinked structure, by reaction with a crosslinking agent, due to introduction of functional groups. The functional groups may be a carboxyl group, hydroxyl group, (meth)acryloyl group, amino group, and the like. Using a modified polyolefin having such functional groups together with a crosslinking agent described below, a crosslinked structure formed of a thermoplastic resin, fluorine-containing resin, and crosslinking agent can be formed in the liquid repellent layer 3, and better durability can be imparted to the liquid repellent layer 3.

The crosslinking agent is preferred to have functional groups that can react with the fluorine-containing resin. As such a crosslinking agent, for example, one having functional groups such as an aziridine group, isocyanate group, carbodiimide group, and amino group can be used. Commercially available crosslinking agents may include, for example, Chemitite manufactured by Nippon Shokubai Co., Ltd., Takenate manufactured by Mitsui Chemicals, Inc., Carbodilite manufactured by Nisshinbo Chemical Inc., Meikanate manufactured by Meisei Chemical Works, Ltd., and Cymel manufactured by Cytec Industries Japan LLC.

It should be noted that fluorine-containing resins are dispersed in water in general for use as aqueous dispersions. Therefore, most of fluorine-containing resins have hydrophilic groups such as hydroxyl groups and amino groups to enhance an affinity for water. Using a crosslinking agent having functional groups that can react with a fluorine-containing resin, the functional groups of the fluorine-containing resin can react with the functional groups of the crosslinking agent to form a crosslinked structure in the liquid repellent layer. Furthermore, the functional groups of the fluorine-containing resin are reduced in number by reaction with the crosslinking agent so that the functional groups remaining in the liquid repellent layer are reduced in number. Accordingly, even if the liquid repellent layer is in contact with a liquid for a long period of time, deterioration in liquid repellency can be minimized and good liquid repellency can be maintained for a long period of time. If the fluorine-containing resin is dispersed in a solvent other than water for use as a dispersion, the fluorine-containing resin may have a structure (e.g., hydrocarbon chain, etc.) for enhancing an affinity for the solvent used.

As described above, when the BET specific surface area M of the first filler 5f is 100 m²/g to 400 m²/g, the ratio M/F of the BET specific area M of the first filler 5f to a mass F (mass%) of the fluorine-containing resin in the liquid repellent layer relative to the total mass of the liquid repellent layer is 4.1 to 20.0. The present inventors have found out that, in order to form a liquid repellent layer maintaining liquid repellency to oil or oil-containing liquids, etc. for a long period of time, it is not sufficient to consider only the mass of the first filler and the mass of the fluorine-containing resin, but it is important to adjust the mass of the fluorine-containing resin according to the BET specific surface area of the first filler. If the value of M/F is in the above range, liquid repellency (oil repellency) can be maintained for a long period of time against oil or oil-containing liquids, etc. From this perspective, M/F is preferred to be 4.5 to 15.0, and more preferred to be 5.0 to 10.0.

The content of the fluorine-containing resin in the binder resin 5b (mass standard of the binder resin 5b) is preferred to be, for example, 5 mass% or more, more preferred to be 15 mass% or more, or even more preferred to be 50 mass% or more. The content of the fluorine-containing resin in the binder resin 5b may be 100 mass%; however, if the binder resin 5b contains a thermoplastic resin or a crosslinking agent, the content of the fluorine-containing resin may be 99 mass% or less, or more preferably 75 mass% or less. If the content of the fluorine-containing resin in the binder resin 5b is 5 mass% or more, the liquid repellent layer can easily exhibit good liquid repellency, and if it is 99 mass% or less, the content of the thermoplastic resin or the crosslinking agent can be sufficiently secured, and separation of the liquid repellent layer from the filler can be sufficiently minimized, while enhancing durability of the liquid repellent layer.

The content of the thermoplastic resin in the binder resin 5b (mass standard of the binder resin 5b) may be, for example, 5 mass% to 90 mass%, more preferably 10 mass% to 50 mass%, or even more preferably 20 mass% to 30 mass%. If the content of the thermoplastic resin in the binder resin 5b is 5 mass% or more, separation of the filler from the liquid repellent layer can be sufficiently minimized, and if it is 90 mass% or less, the content of the fluorine-containing resin or the crosslinking agent can be sufficiently secured, and the liquid repellent layer can easily exhibit good liquid repellency and durability.

The ratio W_{C}/W_{J} between a mass Wc of the crosslinking agent contained in the binder resin 5b and a mass W_{J} of the fluorine-containing resin contained in the binder resin 5b may be, for example, 0.01 to 0.5, more preferably 0.05 to 0.3, or even more preferably 0.1 to 0.2. If the ratio W_{C}/W_{J} is 0.01 or more, separation of the liquid repellent layer from the filler can be sufficiently minimized, and durability of the liquid repellent layer can be sufficiently enhanced. Furthermore, if the ratio W_{C}/W_{J} is 0.5 or less, the content of the fluorine-containing resin can be sufficiently secured, and the fluorine-containing resin can sufficiently bleed out on the surface of the liquid repellent layer, thereby exhibiting good liquid repellency.

The ratio W_{B}/W_{S} between a mass W_{B} of the binder resin 5b contained in the liquid repellent layer and a mass Ws of the filler may be 0.1 to 5, more preferably 0.2 to 2, or even more preferably 0.3 to 1. It should be noted that the mass W_{B} of the binder resin 5b corresponds to the sum of the mass W_{J} of the fluorine-containing resin, a mass W_{P} of the thermoplastic resin if contained, and the mass W_{C} of the crosslinking agent. If the ratio W_{B}/W_{S} is in the above range, asperities can be easily formed with the filler on the surface of the liquid repellent layer, while the entirety of the filler is sufficiently covered with the binder resin 5b. This can minimize separation of the filler from the liquid repellent layer, and both of liquid repellency derived from the filler and liquid repellency derived from the fluorine-containing resin contained in the binder resin 5b can be enjoyed. It should be noted that, even if the liquid repellent layer 3 is combusted, the mass Ws of the filler substantially remains unchanged, and thus, the value of the ratio W_{B}/W_{S} can be calculated by measuring mass variation of the liquid repellent layer due to combustion.

The mass per unit area of the liquid repellent layer may be, for example, 0.3 g/m² to 10.0 g/m², more preferably 1.0 g/m² to 3.0 g/m², or even more preferably 1.5 g/m² to 2.5 g/m². If the mass per unit area of the liquid repellent layer is 0.3 g/m² or more, good liquid repellency can be achieved due to the fluorine-containing resin. Furthermore, if the mass per unit area of the liquid repellent layer is 10.0 g/m² or less, asperities and the liquid repellent effect of the fluorine-containing resin can be efficiently achieved.

The liquid repellent layer may contain other additives, as needed, to an extent not impairing liquid repellency. Other additives may be, for example, flame retardants, slip agents, antiblocking agents, antioxidants, photostabilizers, tackifiers, and the like.

The liquid repellent layer does not necessarily have to contain structural units derived from pyrrolidones, from the perspective of further improving liquid repellency to highly viscous liquids containing surfactants or the like. Specifically, structural units derived from pyrrolidones may need to be contained neither in the fluorine-containing resin nor in other components forming the liquid repellent layer. The presence of structural units derived from pyrrolidones in the liquid repellent layer can be determined using infrared spectroscopy, nuclear magnetic resonance spectroscopy, pyrolysis GC-MS, or the like.

The above embodiment shows an example in which the liquid repellent layer is formed on the treatment surface 1a of the substrate 1 for direct contact therewith; however, the liquid repellent layer may be formed on a primer layer which is formed on the treatment surface 1a of the substrate 1. The primer layer is a layer arranged between the substrate 1 and the liquid repellent layer, and can be formed covering part or all of the surface (treatment surface 1a) of the substrate 1. With the primer layer being interposed between the substrate 1 and the liquid repellent layer, adhesion between the substrate 1 and the liquid repellent layer can be enhanced. Furthermore, with the provision of the primer layer, liquid repellency of the liquid repellent structure can be further improved.

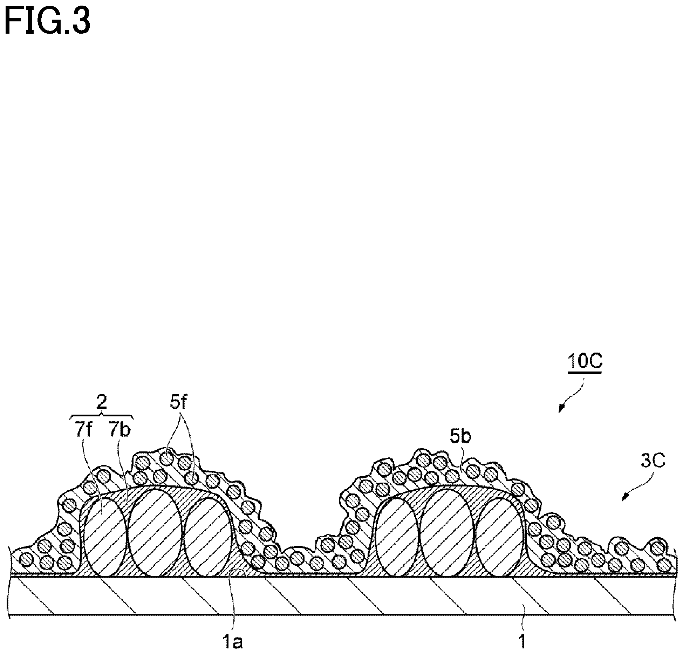

Fig. 3 is a schematic cross-sectional view illustrating another embodiment of the liquid repellent structure according to the present disclosure. As shown in Fig. 3, a liquid repellent structure 10C includes a substrate 1 having a treatment surface 1a, a primer layer 2 formed on the treatment surface 1a, and a liquid repellent layer 3C formed on the primer layer 2. The primer layer contains a binder resin 7b and a third filler 7f. The liquid repellent layer 3C may be one containing the first filler 5f and the binder resin 5b as shown in Fig. 1, or may be one further containing the second filler 6f, in addition to the first filler 5f and the binder resin 5b, as shown in Fig. 2. Fig. 3 shows the former mode as an example. With the provision of the primer layer 2 under the liquid repellent layer 3C, asperities can be more efficiently formed on the surface of the liquid repellent layer 3C, and thus, liquid repellency can be easily maintained for a long period of time.

### (Primer layer)

The primer layer contains a binder resin. The primer layer can be formed of a resin similar to the thermoplastic resin used for the liquid repellent layer. Specific examples of the thermoplastic resin are as described above. The primer layer may be formed of a thermosetting resin. The thermosetting resin may be a urethane resin, epoxy resin, phenol resin, or the like. Using a thermosetting resin, stronger adhesion can be easily achieved between the substrate and the liquid repellent layer. The urethane resin may be BURNOCK manufactured by DIC Corporation, or Takelac, Takenate, or the like manufactured by Mitsui Chemicals, Inc., and the epoxy resin may be EPICLON or the like manufactured by DIC Corporation.

The primer layer may contain a third filler having an average primary particle size of 5 µm to 60 µm. Materials of the third filler may include inorganic materials such as silica, talc, mica, titanium oxide, calcium carbonate, barium sulfate, zinc oxide, smectite, zeolite, and aluminum oxide, and resins such as silicone, acrylic resins, urethane resin, and polyolefin resins (polypropylene or polyethylene). With the third filler being contained, rough asperities can be formed on the surface of the primer layer, and with the liquid repellent layer being provided thereon, rougher and more complicated asperities can be imparted to the liquid repellent structure. Consequently, liquid repellency can be further improved. From this perspective, the average primary particle size of the third filler may be 10 µm to 50 µm, and more preferably 20 µm to 50 µm. The third filler may have a primary particle size of 5 µm to 30 µm.

The third filler may include, for example, Sunsphere (silica) manufactured by AGC Si-Tech Co., Ltd., the silicone powder KMP series (silicone) manufactured by Shin-Etsu Chemical Co., Ltd., Ganzpearl (acrylic resin) manufactured by Aica Kogyo Co..Ltd., Art Pearl (acrylic resin) manufactured by Negami Chemical Industrial Co., Ltd., Art Pearl (urethane resin) manufactured by Negami Chemical Industrial Co., Ltd., Flo-Beads (polyethylene resin) manufactured by Sumitomo Seika Chemicals Co., Ltd., Flo-Beads (polypropylene resin) manufactured by Sumitomo Seika Chemicals Co., Ltd., and MIPELON (ultra-high molecular weight polyethylene) manufactured by Mitsui Chemicals, Inc.

The primer layer can impart rough asperities to the liquid repellent structure. Since the rough asperities facilitate point contact between the liquid repellent layer and the contents, deterioration of the liquid repellency can be further suppressed. The liquid repellent structure may have a surface roughness Sa of 1.5 µm to 15.0 µm, more preferably 2.0 µm to 14.0 µm, and even more preferably 5.0 µm to 14.0 µm, from the perspective of easily achieving sufficient effect of point contact and preventing capture of the contents in the concavities.

The ratio W_{BU}/ W_{SU} between a mass W_{BU} of the binder resin and a mass Wsu of the third filler contained in the primer layer may be 0.1 to 1, or more preferably 0.2 to 0.5 If the ratio W_{BU}/ Wsu is in the above range, rough asperities can be easily formed with the third filler, while minimizing separation of the third filler. The value of the ratio W_{BU}/ W_{SU} can be easily adjusted by adjusting the added amount of the coating material. The value of the ratio W_{BU}/ W_{SU} can be calculated by measuring mass variation of the primer layer due to combustion.

The mass per unit area of the primer layer may be, for example, 1.0 g/m² to 20.0 g/m², and more preferably 3.0 g/m² to 10.0 g/m². If the mass per unit area of the primer layer is 1.0 g/m² or more, good liquid repellency can be easily achieved. Furthermore, if the mass per unit area of the primer layer is 20.0 g/m² or less, a sufficient effect of point contact can be easily exerted.

### <Method of producing liquid repellent structure>

A method of producing a liquid repellent structure will be described. The production method according to the present embodiment includes the steps of: preparing a liquid repellent layer-forming coating liquid; forming a coating film of the coating liquid on a treatment surface of a substrate; and forming a liquid repellent layer by drying and curing the coating film.

### [Sync] Each step will be described below.

First, a coating liquid is prepared, which contains a filler, a fluorine-containing resin, a solvent, a thermoplastic resin as necessary, and a crosslinking agent as necessary. In this case, a first filler having a BET specific surface area M of 100 m²/g to 400 m²/g is used as the filler. The solvent may be water, alcohol, an organic solvent, or the like. The content (solid content) of each component in the coating liquid may be appropriately adjusted so that the content of the component in the liquid repellent layer will be as described above. However, the coating liquid is prepared such that the ratio M/F of a BET specific surface area M of the first filler to a mass F (mass%) of the fluorine-containing resin relative to the total mass of the solid content contained in the coating liquid will be 4.1 to 20.0. It should be noted that the thermoplastic resin may be dispersed in water, alcohol, or the like and provided in the form of an emulsion. Such a polyolefin emulsion may be prepared through a method of emulsifying a polymer produced by polymerization reaction with a corresponding monomer, or may be prepared through emulsion polymerization of a corresponding monomer.

The obtained coating liquid is applied to a substrate. As the coating method, known methods can be used without any particular limitation, including immersion methods (dipping methods), or methods using sprayers, coaters, printers, brushes, and the like. Also, types of coaters and printers used in these methods and their coating methods may be gravure coaters, reverse roll coaters, micro gravure coaters, coaters combined with chamber doctor, air knife coaters, dip coaters, bar coaters, comma coaters, die coaters, and the like used for a direct gravure method, reverse gravure method, kiss reverse gravure method, offset gravure method, and the like. The amount of the coating liquid can be appropriately adjusted so that the mass per unit area of the liquid repellent layer mentioned above can be achieved.

The coating film formed on the substrate is dried and cured by heating. Thus, a liquid repellent structure including a substrate and a liquid repellent layer provided on the substrate can be obtained. If the coating liquid contains a crosslinking agent, the liquid repellent layer will have a crosslinked structure containing a fluorine-containing resin, and a thermoplastic resin and a crosslinking agent used as necessary. Heating conditions are not limited as long as the solvent can be evaporated and a crosslinking reaction can occur. For example, heating can be performed at 60°C to 100°C for 0.5 to 5 minutes.

If the liquid repellent structure further includes a primer layer, the production method according to the present embodiment may include the steps of: preparing a primer layer-forming coating liquid and a liquid repellent layer-forming coating liquid; forming a coating film of the primer layer-forming coating liquid on the treatment surface of a substrate; forming a primer layer by drying and curing the coating film; forming a coating film of the liquid repellent layer-forming coating liquid; and forming a liquid repellent layer by drying and curing the coating film. The preparation and application of the primer layer-forming coating liquid, and drying and curing of the coating film can be performed according to the description regarding the preparation and application of the liquid repellent layer-forming coating liquid, and drying and curing of the coating film.

### (Liquid repellent layer-forming coating liquid)

The liquid repellent layer-forming coating liquid is prepared in the step of preparing the liquid repellent layer-forming coating liquid mentioned above. Specifically, the liquid repellent layer-forming coating liquid contains a binder resin containing a fluorine-containing resin, and a filler containing a first filler having a BET specific surface area M of 100 m₂/g to 400 m₂/g. In the coating liquid, the ratio M/F of the BET specific surface area M of the first filler to a mass F (mass%) of the fluorine-containing resin relative to the total mass of the solid content contained in the coating liquid is 4.1 to 20.0.

### <Packaging material>

A packaging material according to the present embodiment has a liquid repellent structure on the side that comes in contact with substances. The packaging material according to the present embodiment can be applied to substances containing water (e.g., water, beverages, and yogurt) and substances containing oil (e.g., salad oil, curry, and fresh cream), and can also be applied to substances containing surfactants, i.e., types of substances selected from the group consisting of milky lotion, hand soap, body soap, shampoo, and rinse. The packaging material according to the present embodiment can maintain liquid repellency for a long period of time particularly to oil or oil-containing liquids, etc. or surfactant-containing liquids, etc. among the above materials. Specific examples of the packaging material may be retort pouches for curry or pasta sauces, containers and lids for yogurt and pudding, containers or refill pouches for toiletries such as hand soap, shampoo, and rinse, tubes for toothpaste or pharmaceuticals, and the like.

### Examples

Further details of the present disclosure will be described in the following experimental examples; however, the present disclosure should not be limited to these examples.

The following materials were used for preparing liquid repellent structures related to the experimental examples.

### (Substrate)

### Polyethylene terephthalate (PET) film

### (Fluorine-containing resin)

AsahiGuard AG-E060 (product name, manufactured by AGC Inc., fluorine-acrylic copolymer not having structural units derived from pyrrolidones, cationic aqueous material)
AsahiGuard AG-E070 (product name, manufactured by AGC Inc., fluorine-acrylic copolymer not having structural units derived from pyrrolidones, cationic aqueous material)
AsahiGuard AG-E082 (product name, manufactured by AGC Inc., fluorine-acrylic copolymer not having structural units derived from pyrrolidones, cationic aqueous material)
AsahiGuard AG-E090 (product name, manufactured by AGC Inc., fluorine-acrylic copolymer not having structural units derived from pyrrolidones, anionic aqueous material)

### (First filler)

AEROSIL 50 (product name, manufactured by Nippon Aerosil Co., Ltd.)
AEROSIL 90G (product name, manufactured by Nippon Aerosil Co., Ltd.)
AEROSIL 130 (product name, manufactured by Nippon Aerosil Co., Ltd.)
AEROSIL 200 (product name, manufactured by Nippon Aerosil Co., Ltd.)
AEROSIL 300 (product name, manufactured by Nippon Aerosil Co., Ltd.)
AEROSIL 380 (product name, manufactured by Nippon Aerosil Co., Ltd.)
SNOWTEX ST-30 (product name, manufactured by Nissan Chemical Corporation)
SNOWTEX ST-XS (product name, manufactured by Nissan Chemical Corporation) 530 (product name, manufactured by Fuji Silysia Chemical Ltd.)
HDK V15 (product name, manufactured by Wacker Asahikasei Silicone Co., Ltd., bead filler)
HDK N20 (product name, manufactured by Wacker Asahikasei Silicone Co., Ltd., bead filler)
HDK T30 (product name, manufactured by Wacker Asahikasei Silicone Co., Ltd., bead filler)
HDK T40 (product name, manufactured by Wacker Asahikasei Silicone Co., Ltd., bead filler)
SNOWTEX PS-S-PO (product name, manufactured by Nissan Chemical Corporation, bead filler)

### (Second filler)

SUNLOVELY (product name, manufactured by AGC Si-Tech Co., Ltd., average particle size: 4 µm to 6 µm)

### (Third filler)

Art Pearl SE-010T (product name, manufactured by Negami Chemical Industrial Co., Ltd., crosslinking acrylic resin particles)
Art Pearl SE-020T (product name, manufactured by Negami Chemical Industrial Co., Ltd., crosslinking acrylic resin particles)
Art Pearl SE-030T (product name, manufactured by Negami Chemical Industrial Co., Ltd., crosslinking acrylic resin particles)
Art Pearl SE-050T (product name, manufactured by Negami Chemical Industrial Co., Ltd., crosslinking acrylic resin particles)

### (Thermoplastic resin)

Arrowbase SB5230N (product name, manufactured by Unitika Ltd., modified polyolefin resin)

### (Solvent)

### Alcoholic solvent (2-propanol)

### <Preparation of liquid repellent structure (without primer layer)>

The components were added to the solvent with formulations for liquid repellent layers as shown in Tables 1 to 5. Each of the mixtures was sufficiently stirred to prepare a liquid repellent layer-forming coating liquid, and the coating liquid was applied to a PET film as a substrate using a bar coater. Subsequently, the applied coating liquid was heated at 80°C for 1 minute for drying and curing to form a liquid repellent layer on the substrate. The amount of coating was adjusted so that the liquid repellent layer would have a mass per unit area of 1.8 g/m². It should be noted that the F/Si ratio in the tables is a ratio between a mass F (mass%) of the fluorine-containing resin relative to the total mass of the liquid repellent layer and a mass Si (mass%) of the silica filler, and corresponds to the value of the ratio W_{B}/W_{S} described above.

### (Surface roughness)

The arithmetical mean height of the scale limited surface (Sa) was measured according to paragraph 4.1.7 of geometrical product specifications (GPS) - Surface texture: Areal - Part 2: Terms, definitions and surface texture parameters of JIS B 0681-2. If a gradient was found in a sample, surface correction (gradient correction) was performed and then Sa was measured through three-dimensional measurement. Three arbitrary points of the liquid-repellent structure were measured, and the average value thereof was taken as the surface roughness Sa.
Measuring device: OLS4000 (laser microscope) manufactured by Olympus Corporation
Measurement magnification: × 20
Measurement mode: Multilayer

**[Table 1]**

| | 1st filler | | | 2nd filler | F-cont. resin | | F/Si ratio | BET sp. sur. area/ F-cont. resin | Sur. roughness |
|---|---|---|---|---|---|---|---|---|---|
| Exp. Ex. No. | Product name | Average prim. particle size | BET sp. sur. area m²/g (M) | | Product name | Mass% (F) | | M/F | Sa (µm) |
| 1 | AEROSIL 130 | 15 nm | 130 | None | AG-E070 | 20 | 0.25 | 6.5 | 0.6 |
| 2 | | | 130 | | | 26 | 0.35 | 5.0 | 0.6 |
| 3 | | | 130 | | | 33 | 0.50 | 3.9 | 0.6 |
| 4 | | | 130 | | | 41 | 0.70 | 3.2 | 0.5 |
| 5 | | | 130 | | | 50 | 1.00 | 2.6 | 0.5 |
| 6 | | | 130 | | | 58 | 1.40 | 2.2 | 0.5 |
| 7 | | | 130 | | | 67 | 2.00 | 2.0 | 0.5 |
| 8 | | | 130 | | | 83 | 5.00 | 1.6 | 0.5 |
| 9 | AEROSIL 200 | 12 nm | 200 | None | AG-E060 | 20 | 0.25 | 10.0 | 0.6 |
| 10 | | | 200 | | | 26 | 0.35 | 7.7 | 0.6 |
| 11 | | | 200 | | | 33 | 0.50 | 6.0 | 0.5 |
| 12 | | | 200 | | | 41 | 0.70 | 4.9 | 0.5 |
| 13 | | | 200 | | | 50 | 1.00 | 4.0 | 0.5 |
| 14 | | | 200 | | | 58 | 1.40 | 3.4 | 0.5 |
| 15 | | | 200 | | | 67 | 2.00 | 3.0 | 0.4 |
| 16 | AEROSIL 300 | 7 nm | 300 | None | AG-E082 | 20 | 0.25 | 15.0 | 0.4 |
| 17 | | | 300 | | | 26 | 0.35 | 11.6 | 0.4 |
| 18 | | | 300 | | | 33 | 0.50 | 9.0 | 0.4 |
| 19 | | | 300 | | | 41 | 0.70 | 7.3 | 0.4 |
| 20 | | | 300 | | | 50 | 1.00 | 6.0 | 0.4 |
| 21 | | | 300 | | | 58 | 1.40 | 5.1 | 0.4 |
| 22 | | | 300 | | | 67 | 2.00 | 4.5 | 0.3 |
| 23 | | | 300 | | | 75 | 3.00 | 4.0 | 0.3 |
| 24 | | | 300 | | | 80 | 4.00 | 3.8 | 0.3 |
| 25 | AEROSIL 380 | 5 nm | 380 | None | AG-E060 | 20 | 0.25 | 19.0 | 0.4 |
| 26 | | | 380 | | | 26 | 0.35 | 14.7 | 0.4 |
| 27 | | | 380 | | | 33 | 0.50 | 11.4 | 0.3 |
| 28 | | | 380 | | | 41 | 0.70 | 9.2 | 0.3 |
| 29 | | | 380 | | | 50 | 1.00 | 7.6 | 0.3 |
| 30 | | | 380 | | | 58 | 1.40 | 6.5 | 0.3 |
| 31 | | | 380 | | | 67 | 2.00 | 5.7 | 0.3 |
| 32 | SNOWTEX ST-30 | 12 nm | 240 | None | AG-E090 | 20 | 0.25 | 12.0 | 0.3 |
| 33 | | | 240 | | | 26 | 0.35 | 9.3 | 0.3 |
| 34 | | | 240 | | | 33 | 0.50 | 7.2 | 0.3 |
| 35 | | | 240 | | | 41 | 0.70 | 5.8 | 0.3 |
| 36 | | | 240 | | | 50 | 1.00 | 4.8 | 0.3 |
| 37 | | | 240 | | | 58 | 1.40 | 4.1 | 0.3 |
| 38 | | | 240 | | | 67 | 2.00 | 3.6 | 0.3 |

**[Table 2]**

| | 1st filler | | | 2nd filler | F-cont. resin | | F/Si ratio | BET sp. sur. area/ F-cont. resin | Sur. roughness |
|---|---|---|---|---|---|---|---|---|---|
| Exp. Ex. No. | Product name | Average prim. particle size | BET sp. sur. area m²/g (M) | | Product name | Mass% (F) | | M/F | Sa (µm) |
| 39 | HDK V15 | | 150 | None | AG-E060 | 20 | 0.25 | 7.5 | 0.5 |
| 40 | | | 150 | | | 26 | 0.35 | 5.8 | 0.5 |
| 41 | | | 150 | | | 33 | 0.50 | 4.5 | 0.5 |
| 42 | | | 150 | | | 41 | 0.70 | 3.6 | 0.5 |
| 43 | | | 150 | | | 50 | 1.00 | 3.0 | 0.4 |
| 44 | | | 150 | | | 58 | 1.40 | 2.6 | 0.4 |
| 45 | | | 150 | | | 83 | 5.00 | 1.8 | 0.4 |
| 46 | HDK N20 | | 200 | None | AG-E060 | 20 | 0.25 | 10.0 | 0.5 |
| 47 | | | 200 | | | 26 | 0.35 | 7.7 | 0.5 |
| 48 | | | 200 | | | 33 | 0.50 | 6.0 | 0.5 |
| 49 | | | 200 | | | 41 | 0.70 | 4.9 | 0.4 |
| 50 | | | 200 | | | 50 | 1.00 | 4.0 | 0.4 |
| 51 | | | 200 | | | 58 | 1.40 | 3.4 | 0.4 |
| 52 | | | 200 | | | 67 | 2.00 | 3.0 | 0.4 |
| 53 | HDK T30 | | 300 | None | AG-E060 | 20 | 0.25 | 15.0 | 0.5 |
| 54 | | | 300 | | | 26 | 0.35 | 11.6 | 0.5 |
| 55 | | | 300 | | | 33 | 0.50 | 9.0 | 0.5 |
| 56 | | | 300 | | | 41 | 0.70 | 7.3 | 0.5 |
| 57 | | | 300 | | | 50 | 1.00 | 6.0 | 0.4 |
| 58 | | | 300 | | | 58 | 1.40 | 5.1 | 0.4 |
| 59 | | | 300 | | | 67 | 2.00 | 4.5 | 0.4 |
| 60 | | | 300 | | | 75 | 3.00 | 4.0 | 0.3 |
| 61 | | | 300 | | | 80 | 4.00 | 3.8 | 0.3 |
| 62 | HDK T40 | | 400 | None | AG-E060 | 20 | 0.25 | 20.0 | 0.4 |
| 63 | | | 400 | | | 26 | 0.35 | 15.4 | 0.4 |
| 64 | | | 400 | | | 33 | 0.50 | 12.0 | 0.4 |
| 65 | | | 400 | | | 41 | 0.70 | 9.7 | 0.4 |
| 66 | | | 400 | | | 50 | 1.00 | 8.0 | 0.4 |
| 67 | | | 400 | | | 58 | 1.40 | 6.9 | 0.4 |
| 68 | | | 400 | | | 80 | 4.00 | 5.0 | 0.4 |
| 69 | SNOWTEX PS-S-PO | 15 nm | 190 | None | AG-E090 | 20 | 0.25 | 9.5 | 0.3 |
| 70 | | | 190 | | | 26 | 0.35 | 7.3 | 0.3 |
| 71 | | | 190 | | | 33 | 0.50 | 5.7 | 0.3 |
| 72 | | | 190 | | | 41 | 0.70 | 4.6 | 0.3 |
| 73 | | | 190 | | | 50 | 1.00 | 3.8 | 0.3 |
| 74 | | | 190 | | | 58 | 1.40 | 3.3 | 0.3 |
| 75 | | | 190 | | | 67 | 2.00 | 2.9 | 0.3 |

**[Table 3]**

| | 1 st filler | | | 2nd filler | F-cont. resin | | F/Si ratio | BET sp. sur. area/ F-cont. resin | Sur. roughness |
|---|---|---|---|---|---|---|---|---|---|
| Exp. Ex. No. | Product name | Average prim. particle size | BET sp. sur. area m²/g (M) | | Product name | Mass% (F) | | M/F | Sa (µm) |
| 76 | AEROSIL 200 | 12 nm | 200 | SUNLOVELY | AG-E060 | 20 | 0.25 | 10.0 | 0.8 |
| 77 | | | 200 | | | 26 | 0.35 | 7.7 | 0.8 |
| 78 | | | 200 | | | 33 | 0.50 | 6.0 | 0.8 |
| 79 | | | 200 | | | 41 | 0.70 | 4.9 | 0.8 |
| 80 | | | 200 | | | 50 | 1.00 | 4.0 | 0.7 |
| 81 | | | 200 | | | 58 | 1.40 | 3.4 | 0.7 |
| 82 | | | 200 | | | 67 | 2.00 | 3.0 | 0.6 |
| 83 | HDK N20 | .. | 200 | SUNLOVELY | AG-E060 | 20 | 0.25 | 10.0 | 0.8 |
| 84 | | | 200 | | | 26 | 0.35 | 7.7 | 0.8 |
| 85 | | | 200 | | | 33 | 0.50 | 6.0 | 0.8 |
| 86 | | | 200 | | | 41 | 0.70 | 4.9 | 0.8 |
| 87 | | | 200 | | | 50 | 1.00 | 4.0 | 0.8 |
| 88 | | | 200 | | | 58 | 1.40 | 3.4 | 0.7 |
| 89 | | | 200 | | | 67 | 2.00 | 3.0 | 0.7 |

It should be noted that the formulation ratios between the first and second fillers were as follows.

**[Table 4]**

| Exp. Ex. No. | 1st filler Ws1 | 2nd filler Ws2 | Formulation ratio Ws2/Ws1 | Mass (mass part(s)) of 2nd filler relative to 100 mass parts of 1st filler |
|---|---|---|---|---|
| 76 | AEROSIL 200 | SUNLOVELY | 0.5 | 50 |
| 77 | | | 0.5 | 50 |
| 78 | | | 0.3 | 30 |
| 79 | | | 0.3 | 30 |
| 80 | | | 0.2 | 20 |
| 81 | | | 0.2 | 20 |
| 82 | | | 0.1 | 10 |
| 83 | HDK N20 | | 0.5 | 50 |
| 84 | | | 0.5 | 50 |
| 85 | | | 0.3 | 30 |
| 86 | | | 0.3 | 30 |
| 87 | | | 0.2 | 20 |
| 88 | | | 0.2 | 20 |
| 89 | | | 0.1 | 10 |

**[Table 5]**

| | 1 st filler | | | 2nd filler | F-cont. resin | | F/Si ratio | BET sp. sur. area/ F-cont. resin | Sur. rough-ness |
|---|---|---|---|---|---|---|---|---|---|
| Exp. Ex. No. | Product name | Average prim. particle size | BET sp. sur. area m²/g (M) | | Product name | Mass% (F) | | M/F | Sa (µm) |
| 90 | AEROSIL 50 | 30 nm | 50 | None | AG-E060 | 33 | 0.49 | 1.5 | 0.5 |
| 91 | AEROSIL 90G | 22 nm | 90 | None | AG-E090 | 33 | 0.49 | 2.7 | 0.4 |
| 92 | 530 | 2.7 µm | 500 | None | AG-E082 | 33 | 0.49 | 15.2 | 0.9 |
| 93 | SNOWTEX ST-XS | 5 nm | 600 | None | AG-E090 | 33 | 0.49 | 18.2 | 0.5 |
| 94 | AEROSIL 300 | 7 nm | 300 | None | AG-E060 | 14 | 0.16 | 21.4 | 0.6 |
| 95 | AEROSIL 200 | 12 nm | 200 | None | AG-E060 | 9 | 0.10 | 22.2 | 0.7 |
| 96 | AEROSIL 130 | 15 nm | 130 | None | AG-E060 | 95 | 19.00 | 1.4 | 0.2 |

### <Preparation of liquid repellent structure (with primer layer)>

The components were added to the solvent with formulations for liquid repellent layers as shown in Table 6. Each of the mixtures was sufficiently stirred to prepare a liquid repellent layer-forming coating liquid, and the coating liquid was applied to a PET film as a substrate using a bar coater. Subsequently, the applied coating liquid was heated at 80°C for 1 minute for drying and curing to form a primer layer on the substrate. The amount of coating was adjusted so that the primer layer would have a mass per unit area of 5.00 g/m². The ratio W_{BU}/ Wsu between the mass W_{BU} of the thermoplastic resin (binder resin) and the mass Wsu of the third filler contained in the primer layer was 0.2. Subsequently, a liquid repellent layer was formed on the primer layer similarly to the case of the liquid repellent structure without primer layer. When the liquid repellent layer contains the first and second fillers, the formulation ratio Ws2/Ws1 between the first and second fillers was 0.5 (the mass of the second filler was 50 parts by mass relative to 100 parts by mass of the first filler).

**[Table 6]**

| | 1 st filler | | | 2nd filler | F-cont. resin | | F/Si ratio | BET sp. sur. area/ F-cont. resin | Primer layer | | | Sur. roughness |
|---|---|---|---|---|---|---|---|---|---|---|---|---|
| Exp. Ex. No. | Product name | Average prim. particle size | BET sp. sur. area m²/g (M) | | Product name | Mass% (F) | | M/F | Thermoplastic resin | 3rd filler | Average prim. particle size | Sa (µm) |
| 97 | AEROSI L 200 | 12 nm | 200 | None | AGE060 | 33 | 0.50 | 6.0 | SB5230N | SE-010T | 10 µm | 2.2 |
| 98 | | | 200 | | | | 0.50 | 6.0 | | SE-020T | 20 µm | 6.1 |
| 99 | | | 200 | | | | 0.50 | 6.0 | | SE-030T | 30 µm | 7.5 |
| 100 | | | 200 | | | | 0.50 | 6.0 | | SE-050T | 50 µm | 13.5 |
| 101 | HDK N20 | .. | 200 | None | AGE060 | 33 | 0.50 | 6.0 | SB5230N | SE-010T | 10 µm | 2.3 |
| 102 | | | 200 | | | | 0.50 | 6.0 | | SE-020T | 20 µm | 6.5 |
| 103 | | | 200 | | | | 0.50 | 6.0 | | SE-030T | 30 µm | 7.1 |
| 104 | | | 200 | | | | 0.50 | 6.0 | | SE-050T | 50 µm | 13.8 |
| 105 | AEROSI L 200 | 12 nm | 200 | SUN-LOV ELY | AGE060 | 33 | 0.50 | 6.0 | SB5230N | SE-010T | 10 µm | 2 |
| 106 | | | 200 | | | | 0.50 | 6.0 | | SE-020T | 20 µm | 6 |
| 107 | | | 200 | | | | 0.50 | 6.0 | | SE-030T | 30 µm | 7.3 |
| 108 | | | 200 | | | | 0.50 | 6.0 | | SE-050T | 50 µm | 13.6 |
| 109 | HDK N20 | .. | 200 | SUN-LOV ELY | AGE060 | 33 | 0.50 | 6.0 | SB5230N | SE-010T | 10 µm | 2.4 |
| 110 | | | 200 | | | | 0.50 | 6.0 | | SE-020T | 20 µm | 6.3 |
| 111 | | | 200 | | | | 0.50 | 6.0 | | SE-030T | 30 µm | 7.6 |
| 112 | | | 200 | | | | 0.50 | 6.0 | | SE-050T | 50 µm | 13.9 |

### <Evaluation for liquid repellent structure>

The liquid repellent structures were evaluated from the following perspectives. The evaluation results are shown in Tables 7 to 11.

### (Evaluation for liquid repellency)

Each liquid repellent structure was placed flat with the surface of the liquid repellent layer on top, and 2 µL of the following liquids was dropped on the liquid repellent layer using a dropper. Subsequently, the liquid repellent structure was placed vertically and left in this state for 30 seconds. Then, the state of the dropped liquid was visually observed. As a result of the observation, liquid repellency was evaluated based on the following criteria. If the evaluation result is 2 to 5, it can be said that there is no practical problem. The evaluation result is desired to be 3 to 5.

### [Liquid used]

Pure water
Yogurt: Meiji Bulgaria Yogurt L81, low sugar content (Meiji Holdings Co., Ltd.)
Salad oil: Nisshin Salad Oil (The Nisshin OilliO Group, Ltd.)
Curry (room temperature): Bon Curry Gold Medium Hot (Otsuka Foods Co., Ltd.)
Milky lotion: Milky lotion containing soybean milk isoflavone (TOKIWA Pharmaceutical Co., Ltd.)

### [Evaluation criteria]

5: The droplets curled up and rolled off from the surface of the liquid repellent layer, or separated.
4: The liquid flowed down from the surface of the liquid repellent layer, and no traces of liquid flow remained.
3: The liquid flowed down from the surface of the liquid repellent layer, but traces of liquid flow remained in dots.
2: The liquid flowed down from the surface of the liquid repellent layer, but traces of liquid flow remained in lines.
1: The liquid stayed on the liquid repellent layer and did not move, or soaked into the liquid repellent layer.

### (Evaluation for durability)

Each liquid repellent structure was cut to a size of 50 mm wide by 100 mm long to prepare specimens. Some liquids used for liquid repellency evaluation were injected with an amount of 150 ml into 200-ml beakers, and the specimens were dipped in the liquids to half of the length thereof and left to stand at room temperature (25°C) for 5 days. After being left, the specimens were pulled out of the liquids, and the state of adhesion of the liquids to the liquid repellent layer formed-surfaces of the dipped portions of the liquid repellent structures was visually observed to evaluate durability (liquid repellency after long contact with the liquids) based on the following evaluation criteria.

### [Evaluation criteria]

5: No adhesion of the liquid to the dipped portion was observed.
4: Adhesion of the liquid to less than 10% of the area of the dipped portion was observed.
3: Adhesion of the liquid to 10% or more and less than 30% of the area of the dipped portion was observed.
2: Adhesion of the liquid to 30% or more and less than 70% of the area of the dipped portion was observed.
1: Adhesion of the liquid to 70% or more of the area of the dipped portion was observed.

**[Table 7]**

| | Liquid repellency | | | | | Durability |
|---|---|---|---|---|---|---|
| Exp. Ex. No. | Pure water | Yogurt | Salad oil | Curry | Milky lotion | Salad oil |
| 1 | 5 | 4 | 3 | 2 | 2 | 3 |
| 2 | 5 | 4 | 3 | 2 | 2 | 3 |
| 3 | 4 | 3 | 2 | 2 | 2 | 2 |
| 4 | 4 | 3 | 2 | 2 | 2 | 2 |
| 5 | 4 | 3 | 2 | 2 | 2 | 2 |
| 6 | 4 | 3 | 2 | 2 | 2 | 2 |
| 7 | 4 | 3 | 2 | 2 | 2 | 2 |
| 8 | 4 | 3 | 2 | 2 | 2 | 2 |
| 9 | 5 | 4 | 3 | 2 | 2 | 3 |
| 10 | 5 | 4 | 3 | 2 | 2 | 3 |
| 11 | 5 | 4 | 3 | 2 | 2 | 3 |
| 12 | 5 | 4 | 3 | 2 | 2 | 3 |
| 13 | 4 | 3 | 2 | 2 | 2 | 2 |
| 14 | 4 | 3 | 2 | 2 | 2 | 2 |
| 15 | 4 | 3 | 2 | 2 | 2 | 2 |
| 16 | 5 | 4 | 3 | 2 | 2 | 3 |
| 17 | 5 | 4 | 3 | 2 | 2 | 3 |
| 18 | 5 | 4 | 3 | 2 | 2 | 3 |
| 19 | 5 | 4 | 3 | 2 | 2 | 3 |
| 20 | 5 | 4 | 3 | 2 | 2 | 3 |
| 21 | 5 | 4 | 3 | 2 | 2 | 3 |
| 22 | 5 | 4 | 3 | 2 | 2 | 3 |
| 23 | 4 | 3 | 2 | 2 | 2 | 2 |
| 24 | 4 | 3 | 2 | 2 | 2 | 2 |
| 25 | 5 | 4 | 3 | 2 | 2 | 3 |
| 26 | 5 | 4 | 3 | 2 | 2 | 3 |
| 27 | 5 | 4 | 3 | 2 | 2 | 3 |
| 28 | 5 | 4 | 3 | 2 | 2 | 3 |
| 29 | 5 | 4 | 3 | 2 | 2 | 3 |
| 30 | 5 | 4 | 3 | 2 | 2 | 3 |
| 31 | 5 | 4 | 3 | 2 | 2 | 3 |
| 32 | 5 | 4 | 3 | 2 | 2 | 3 |
| 33 | 5 | 4 | 3 | 2 | 2 | 3 |
| 34 | 5 | 4 | 3 | 2 | 2 | 3 |
| 35 | 5 | 4 | 3 | 2 | 2 | 3 |
| 36 | 5 | 4 | 3 | 2 | 2 | 3 |
| 37 | 5 | 4 | 3 | 2 | 2 | 3 |
| 38 | 4 | 3 | 2 | 2 | 2 | 2 |

**[Table 8]**

| | Liquid repellency | | | | | Durability |
|---|---|---|---|---|---|---|
| Exp. Ex. No. | Pure water | Yogurt | Salad oil | Curry | Milky lotion | Salad oil |
| 39 | 5 | 4 | 3 | 2 | 2 | 4 |
| 40 | 5 | 4 | 3 | 2 | 2 | 4 |
| 41 | 5 | 4 | 3 | 2 | 2 | 4 |
| 42 | 4 | 3 | 2 | 2 | 2 | 3 |
| 43 | 4 | 3 | 2 | 2 | 2 | 3 |
| 44 | 4 | 3 | 2 | 2 | 2 | 3 |
| 45 | 4 | 3 | 2 | 2 | 2 | 3 |
| 46 | 5 | 4 | 3 | 2 | 2 | 4 |
| 47 | 5 | 4 | 3 | 2 | 2 | 4 |
| 48 | 5 | 4 | 3 | 2 | 2 | 4 |
| 49 | 5 | 4 | 3 | 2 | 2 | 4 |
| 50 | 4 | 3 | 3 | 2 | 2 | 3 |
| 51 | 4 | 3 | 2 | 2 | 2 | 3 |
| 52 | 4 | 3 | 2 | 2 | 2 | 3 |
| 53 | 5 | 4 | 3 | 2 | 2 | 4 |
| 54 | 5 | 4 | 3 | 2 | 2 | 4 |
| 55 | 5 | 4 | 3 | 2 | 2 | 4 |
| 56 | 5 | 4 | 3 | 2 | 2 | 4 |
| 57 | 5 | 4 | 3 | 2 | 2 | 4 |
| 58 | 5 | 4 | 3 | 2 | 2 | 4 |
| 59 | 5 | 4 | 3 | 2 | 2 | 4 |
| 60 | 4 | 3 | 2 | 2 | 2 | 3 |
| 61 | 4 | 3 | 2 | 2 | 2 | 3 |
| 62 | 4 | 4 | 3 | 2 | 2 | 4 |
| 63 | 4 | 4 | 3 | 2 | 2 | 4 |
| 64 | 4 | 4 | 3 | 2 | 2 | 4 |
| 65 | 4 | 4 | 3 | 2 | 2 | 4 |
| 66 | 4 | 4 | 3 | 2 | 2 | 4 |
| 67 | 4 | 4 | 3 | 2 | 2 | 4 |
| 68 | 4 | 4 | 3 | 2 | 2 | 4 |
| 69 | 5 | 4 | 3 | 2 | 2 | 4 |
| 70 | 5 | 4 | 3 | 2 | 2 | 4 |
| 71 | 5 | 4 | 3 | 2 | 2 | 4 |
| 72 | 5 | 4 | 3 | 2 | 2 | 4 |
| 73 | 4 | 3 | 2 | 2 | 2 | 3 |
| 74 | 4 | 3 | 2 | 2 | 2 | 3 |
| 75 | 4 | 3 | 2 | 2 | 2 | 3 |

**[Table 9]**

| | Liquid repellency | | | | | Durability | |
|---|---|---|---|---|---|---|---|
| Exp. Ex. No. | Pure water | Yogurt | Salad oil | Curry | Milky lotion | Salad oil | Milky lotion |
| 76 | 5 | 5 | 4 | 4 | 4 | 4 | 3 |
| 77 | 5 | 5 | 4 | 4 | 4 | 4 | 3 |
| 78 | 5 | 5 | 4 | 4 | 4 | 4 | 3 |
| 79 | 5 | 5 | 4 | 4 | 4 | 4 | 3 |
| 80 | 5 | 5 | 4 | 4 | 4 | 3 | 2 |
| 81 | 5 | 5 | 4 | 4 | 4 | 3 | 2 |
| 82 | 5 | 5 | 4 | 4 | 4 | 3 | 2 |
| 83 | 5 | 5 | 4 | 4 | 4 | 5 | 4 |
| 84 | 5 | 5 | 4 | 4 | 4 | 5 | 4 |
| 85 | 5 | 5 | 4 | 4 | 4 | 5 | 4 |
| 86 | 5 | 5 | 4 | 4 | 4 | 5 | 4 |
| 87 | 5 | 5 | 4 | 4 | 4 | 3 | 3 |
| 88 | 5 | 5 | 4 | 4 | 4 | 3 | 3 |
| 89 | 5 | 5 | 4 | 4 | 4 | 3 | 3 |

**[Table 10]**

| | Liquid repellency | | | | | Durability | |
|---|---|---|---|---|---|---|---|
| Exp. Ex. No. | Pure water | Yogurt | Salad oil | Curry | Milky lotion | Salad oil | Milky lotion |
| 90 | 4 | 3 | 2 | 2 | 2 | 1 | 1 |
| 91 | 4 | 3 | 2 | 2 | 2 | 1 | 1 |
| 92 | 5 | 4 | 3 | 2 | 2 | 1 | 1 |
| 93 | 5 | 4 | 3 | 2 | 2 | 1 | 1 |
| 94 | 1 | 1 | 1 | 1 | 1 | 1 | 1 |
| 95 | 1 | 1 | 1 | 1 | 1 | 1 | 1 |
| 96 | 4 | 1 | 1 | 1 | 1 | 1 | 1 |

**[Table 11]**

| | Liquid repellency | | | | | Durability | |
|---|---|---|---|---|---|---|---|
| Exp. Ex. No. | Pure water | Yogurt | Salad oil | Curry | Milky lotion | Salad oil | Milky lotion |
| 97 | 5 | 5 | 4 | 4 | 4 | 4 | 3 |
| 98 | 5 | 5 | 4 | 4 | 4 | 4 | 3 |
| 99 | 5 | 5 | 4 | 4 | 4 | 4 | 3 |
| 100 | 5 | 5 | 4 | 4 | 4 | 4 | 3 |
| 101 | 5 | 5 | 4 | 4 | 4 | 4 | 3 |
| 102 | 5 | 5 | 4 | 4 | 4 | 4 | 3 |
| 103 | 5 | 5 | 4 | 4 | 4 | 4 | 4 |
| 104 | 5 | 5 | 4 | 4 | 4 | 4 | 4 |
| 105 | 5 | 5 | 4 | 4 | 5 | 5 | 3 |
| 106 | 5 | 5 | 4 | 4 | 5 | 5 | 3 |
| 107 | 5 | 5 | 4 | 4 | 5 | 5 | 4 |
| 108 | 5 | 5 | 4 | 4 | 5 | 5 | 4 |
| 109 | 5 | 5 | 4 | 4 | 5 | 5 | 5 |
| 110 | 5 | 5 | 4 | 4 | 5 | 5 | 5 |
| 111 | 5 | 5 | 4 | 4 | 5 | 5 | 5 |
| 112 | 5 | 5 | 4 | 4 | 5 | 5 | 5 |

It was found that the liquid repellent structures of Experimental Examples 1, 2, 9 to 12, 16 to 22, 25 to 37, 39 to 41, 46 to 49, 53 to 59, 62 to 72, 76 to 79, 83 to 86, and 97 to 112 having the configuration of the present disclosure exhibited good liquid repellency to oil or oil-containing liquids, etc. for a long period of time.

### [Reference Signs List]

- 1: Substrate
- 1a: Treatment surface (surface to be imparted with repellency)
- 2: Primer layer
- 3A, 3B, 3C: Liquid repellent layer
- 5b: Binder resin
- 5f: First filler
- 6f: Second filler
- 7b: Binder resin
- 7f: Third filler
- F: Aggregate
- 10A, 10B, 10C: Liquid repellent structure

## Claims

1. A liquid repellent structure comprising a surface to which liquid repellency is to be imparted, and a liquid repellent layer formed on the surface, wherein
the liquid repellent layer contains a binder resin containing a fluorine-containing resin, and a filler dispersed in the binder resin;
the filler contains a first filler having a BET specific surface area M of 100 m²/g to 400 m²/g; and
a ratio M/F of the BET specific surface area M of the first filler to a mass F (mass%) of the fluorine-containing resin relative to a total mass of the liquid repellent layer is 4.1 to 20.0.

2. The liquid repellent structure according to claim 1, wherein the first filler has a structure in which a plurality of primary particles are connected to each other in a bead-like manner.

3. The liquid repellent structure according to claim 1 or 2, wherein the fluorine-containing resin contains a fluorine-acrylic copolymer.

4. The liquid repellent structure according to any one of claims 1 to 3, wherein the filler contains a second scale-like filler.

5. The liquid repellent structure according to any one of claims 1 to 4, further comprising a primer layer interposed between the surface and the liquid repellent layer, wherein
the primer layer contains a binder resin and a third filler having an average primary particle size of 5 µm to 60 µm.

6. The liquid repellent structure according to claim 5 having a surface roughness Sa of 1.5 µm to 15.0 µm.

7. A packaging material having the liquid repellent structure according to any one of claims 1 to 6 on a side that comes in contact with substances.

8. The packaging material according to claim 7, wherein the substances contain oil.

9. A method of producing a liquid repellent structure, comprising the steps of:
preparing a coating liquid that contains a binder resin containing a fluorine-containing resin, and a filler;
forming a coating film of the coating liquid on a surface to which liquid repellency is to be imparted; and
forming a liquid repellent layer by drying and curing the coating film, wherein
the filler contains a first filler having a BET specific surface area M of 100 m²/g to 400 m²/g; and
a ratio M/F of the BET specific surface area M of the first filler to a mass F (mass%) of the fluorine-containing resin relative to a total mass of a solid content contained in the coating liquid is 4.1 to 20.0.

10. A liquid repellant layer-forming coating liquid, the coating liquid comprising a binder resin containing a fluorine-containing resin, and a filler, wherein
the filler contains a first filler having a BET specific surface area M of 100 m²/g to 400 m²/g; and
a ratio M/F of the BET specific surface area M of the first filler to a mass F (mass%) of the fluorine-containing resin relative to a total mass of a solid content contained in the coating liquid is 4.1 to 20.0.
